(19) Europäisches Patentamt
European Patent Office
Office européen des brevets

(11) Veröffentlichungsnummer: **0 062 832**
**A1**

(12) # EUROPÄISCHE PATENTANMELDUNG

(21) Anmeldenummer: 82102667.1

(22) Anmeldetag: 30.03.82

(51) Int. Cl.³: C 07 F 9/65
A 01 N 57/16, A 01 N 57/32

(30) Priorität: 07.04.81 DE 3113902

(43) Veröffentlichungstag der Anmeldung:
20.10.82 Patentblatt 82/42

(84) Benannte Vertragsstaaten:
BE CH DE FR GB IT LI NL

(71) Anmelder: BASF Aktiengesellschaft
Carl-Bosch-Strasse 38
D-6700 Ludwigshafen(DE)

(72) Erfinder: Theobald, Hans, Dr.
Parkstrasse 2
D-6703 Limburgerhof(DE)

(72) Erfinder: Adolphi, Heinrich, Dr.
Kalmitweg 11
D-6703 Limburgerhof(DE)

(72) Erfinder: Kohler, Rolf-Dieter, Dr.
Amselweg 3
D-6803 Edingen(DE)

(54) **1,3,4-Thiadiazolylmethyl-thiolphosphorsäurederivate, Verfahren zu ihrer Herstellung und ihre Verwendung zur Bekämpfung von Schädlingen.**

(57) Die vorliegende Erfindung betrifft 1,3,4-Thiadiazolylmethyl-thiophosphorsäurederivate der Formel

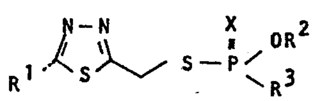

(1)

in der die Substituenten $R^1$, $R^2$, $R^3$ und X die in der Beschreibung genannten Bedeutungen haben, ein Verfahren zur Herstellung dieser Verbindungen und ihre Verwendung zur Bekämpfung von Schädlingen.

EP 0 062 832 A1

1,3,4-Thiadiazolylmethyl-thiolphosphorsäurederivate, Verfahren zu ihrer Herstellung und ihre Verwendung zur Bekämpfung von Schädlingen

Die vorliegende Erfindung betrifft neue 1,3,4-Thiadiazolylmethyl-thiolphosphorsäurederivate, ein Verfahren zu ihrer Herstellung und Schädlingsbekämpfungsmittel, die diese Thiadiazolylmethyl-thiolphosphate als Wirkstoffe enthalten.

Es wurde gefunden, daß 1,3,4-Thiadiazolylmethyl-thiolphosphate der Formel I

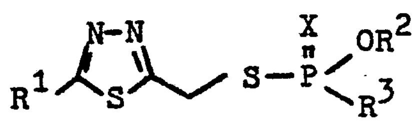

(I),

in der
$R^1$ und $R^2$ gleich oder verschieden sind und einen unverzweigten oder verzweigten Alkylrest mit bis zu 6 Kohlenstoffatomen,
$R^3$ einen unverzweigten oder verzweigten Alkoxy- oder Alkylthiorest mit bis zu 6 Kohlenstoffatomen, die Aminogruppe oder einen unverzweigten oder verzweigten Alkyl- oder Dialkylaminorest mit jeweils bis zu 5 Kohlenstoffatommen in einer Alkylgruppe und
X Sauerstoff oder Schwefel bedeuten,
Schädlinge aus der Klasse der Insekten, Spinnentiere und Nematoden wirkungsvoll bekämpfen.

$R^1$ und $R^2$ in Formel I können gleich oder verschieden sein und für einen unverzweigten oder verzweigten Alkylrest mit bis zu 6 Kohlenstoffatomen, wie Methyl, Ethyl, einen Propyl-, Butyl-, Pentyl- oder Hexylrest, stehen.

H/P

$R^3$ in Formel I bedeutet einen unverzweigten oder verzweigten Alkoxyrest mit bis zu 6 Kohlenstoffatomen, wie Methoxy, Ethoxy, n-Propoxy, Isopropoxy, sec.-Butoxy, Isobutoxy, tert.-Butoxy, 3-Methyl-n-butoxy, 2-Methyl-n-butoxy, 4-Methyl-n-pentoxy, 4-Ethyl-n-butoxy, Neopentoxy oder einen unverzweigten oder verzweigten Alkylthiorest mit bis zu 6 Kohlenstoffatomen, wie Methylthio, Ethylthio, n-Propylthio, Isopropylthio, sec.-Butylthio, Isobutylthio, tert.-Butylthio, 3-Methyl-n-butylthio, 2-Methyl-n-butylthio, 4-Methyl-n-pentylthio, 4-Ethyl-n-butylthio, Neopentylthio, oder einen Alkylamino- oder Dialkylaminorest mit bis zu 5 Kohlenstoffatomen in einer Alkylgruppe, wie Methylamino, Ethylamino, Dimethylamino, Diethylamino, n-Propylamino, Isopropylamino, Di-n-butylamino, n-Butylamino, n-Pentylamino, 3-Methyl-n-butylamino, Di-n-pentylamino.

Bevorzugte Substituenten für $R^1$ und $R^2$ sind Alkylreste mit bis zu 3 Kohlenstoffatomen, wie Methyl, Ethyl, n-Propyl, Isopropyl, für $R^3$ Alkoxyreste mit bis zu 3 Kohlenstoffatomen, wie Methoxy, Ethoxy, n-Propoxy und Isopropoxy, Alkylthioreste mit bis zu 4 Kohlenstoffatomen, wie Methylthio, Ethylthio, n-Propylthio, Isopropylthio, n-Butylthio, Isobutylthio, sec.-Butylthio, oder Alkylamino- oder Dialkylaminoreste mit bis zu 3 Kohlenstoffatomen in einer Alkylgruppe, wie Methylamino, Ethylamino, Dimethylamino, n-Propylamino, Isopropylamino.

Man erhält die 1,3,4-Thiadiazolylmethyl-thiolphosphorsäurederivate der Formel I durch Umsetzung von 1,3,4-Thiadiazolylmethylhalogeniden der Formel II mit Salzen von Thiophosphorsäureestern der Formel III nach folgender Reaktionsgleichung:

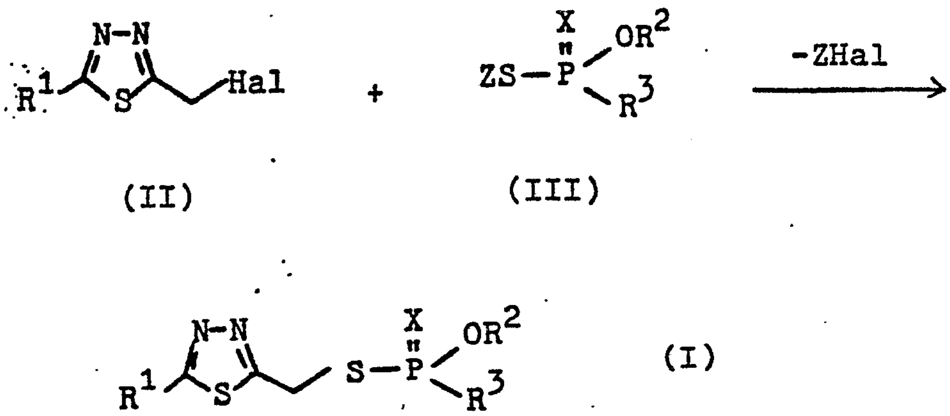


(II) (III)

(I)

Dabei haben die Reste $R^1$, $R^2$, $R^3$ und X die oben angegebenen Bedeutungen, Hal steht für Halogen und Z für ein Alkalimetallion, ein Äquivalent Erdalkalimetallion oder für ein gegebenenfalls durch Alkylreste substituiertes Ammoniumion.

Als Halogen kommen Fluor, Chlor, Brom, Iod in Betracht, bevorzugt sind Chlor und Brom. Als Alkalimetallionen sind Natrium und Kalium, als Erdalkalimetallionen Magnesium und Calcium und als Ammoniumion das unsubstituierte Ion, Methyl-, Ethyl-, Propyl-, i-Propyl-, Dimethyl-, Diethyl-, Trimethyl-, Triethyl-, Tetramethyl- oder Tetraethylammonium bevorzugt.

Die Umsetzung wird zweckmäßigerweise in gegenüber den Reaktionsteilnehmern inerten Lösungs- oder Verdünnungsmitteln durchgeführt. Hierfür sind beispielsweise geeignet: Wasser, Alkohole, wie Methano, Ethanol, Propanol; Ether, wie Tetrahydrofuran, Dioxan, Diglykoldimethylether; Ketone, wie Aceton, Methylethylketon, Diethylketon; aromatische Kohlenwasserstoffe, wie Toluol, Xylole, Chlorbenzole; Nitrile, wie Acetonitril; Dimethylformamid; Dimethylsulfoxid. Auch Gemische dieser Lösungs- und Verdünnungs-

mittel können verwendet werden. Bei Verwendung von nichtwäßrigen Lösungsmitteln kann die Zugabe einer katalytischen Menge Kaliumiodid zur Erhöhung der Reaktivität zweckmäßig sein.

Zur Durchführung des Verfahrens setzt man die Ausgangsstoffe in äquimolarem Verhältnis ein. Ein Überschuß der einen oder anderen Reaktionskomponente kann in einigen Fällen Vorteile bringen.

Die Reaktionstemperatur kann innerhalb eines größeren Bereiches variiert werden. Im allgemeinen arbeitet man bei Temperaturen im Bereich zwischen 0 und 150°C, vorzugsweise im Bereich von 20 bis 100°C.

Die als Ausgangsprodukte verwendeten 1,3,4-Thiadiazolylmethylhalogenide sind aus der DE-OS 29 00 706 bekannt. Die phosphorsauren Salze der Formel III können nach den in Houben-Weyl, Methoden der organ. Chemie, Band XII/2, Seite 131 ff., Georg-Thieme-Verlag, Stuttgart (1964) oder nach dem in der DE-OS 25 06 618 beschriebenen Verfahren hergestellt werden.

Das folgende Beispiel erläutert die Herstellung der 1,3,4-Thiadiazolylmethyl-thiolphosphorsäurederivate. Gewichtsteile verhalten sich zu Volumenteilen wie kg zu l.

<u>Beispiel</u>

O-Ethyl-N-isopropyl-S-(2-methyl-1,3,4-thiadiazol-5-yl-methyl)-thiolphosphorsäureesteramid

Ein Gemisch aus 13,3 Gewichtsteilen 2-Methyl-5-chlormethyl-1,3,4-thiadiazol, 22,8 Gewichtsteilen O-Ethyl-N-isopropylthiophosphorsaures Dimethylammonium, 150 Volumenteilen Aceton und 0,1 Gewichtsteilen Kalium-

iodid wird 9 Stunden lang bei 60°C gerührt. Nach dem Abkühlen wird filtriert, eingeengt und der Rückstand wird in Toluol aufgenommen. Die Toluollösung wird mit verdünnter Kaliumcarbonatlösung und mit Wasser gewaschen und über Natriumsulfat getrocknet. Die Lösung wird dann filtriert, eingeengt und anschließend bei 60°C/0,01 mbar andestilliert. Man erhält 23,1 Gewichtsteile, entsprechend einer Ausbeute von 87,6 % (Wirkstoff Nr. 1).

$C_9H_{18}N_3PO_2S_2$ (295)

| | | | | | |
|---|---|---|---|---|---|
| Ber.: | C 36,6 | H 6,1 | N 14,2 | S 21,7 | P 10,5 |
| Gef.: | C 36,3 | H 6,0 | N 14,1 | S 21,2 | P 10,5 |

80-MHz-NMR-Spektrum in $CDCl_3$ ($\delta$-Werte):
1,2 (6H); 1,35 (3H); 2,75 (3H); 3,3-3,8 (1H+1H);
4,1 (2H); 4,37 (3H).

Auf analoge Weise können beispielsweise die in der folgenden Tabelle aufgeführten 1,3,4-Thiadiazolylmethyl-thiolphosphorsäurederivate hergestellt werden.

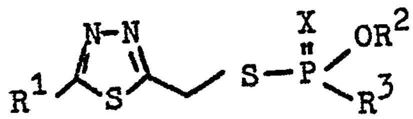

| Nr. | $R^1$ | $R^2$ | $R^3$ | X | NMR-Spektren [MHZ; LM] δ -Werte |
|---|---|---|---|---|---|
| 2 | $CH_3$ | $C_2H_5$ | $OC_2H_5$ | S | [60; $CDCl_3$] 1,3 (6H); 2,8 (3H); 3,8-4,3 (4H); 4,4 (2H) |
| 3 | " | " | $n-C_3H_7S$ | O | [60, $CDCl_3$] 1,0(3H); 1,4(3H); 1,8(2H); 2,8(3H); 2,9(2H); 3,9-4,3(2H); 4,5(2H); |
| 4 | " | " | $sec-C_4H_9S$ | O | [60, $CDCl_3$] 1,0(3H); 1,4(3H); 1,5(3H); 1,7(2H); 2,8(3H); 3,4(1H); 4,16(2H); 4,5(2H); |
| 5 | " | " | $i-C_4H_9S$ | O | |
| 6 | " | $CH_3$ | . | O | |
| 7 | " | $C_2H_5$ | . | O | |
| 8 | " | " | $N(CH_3)_2$ | O | |
| 9 | $C_2H_5$ | " | $NH(i-C_3H_7)$ | O | |
| 10 | $n-C_3H_7$ | " | " | O | |
| 11 | $i-C_3H_7$ | " | " | O | |
| 12 | " | " | $sec-C_4H_9S$ | O | |
| 13 | " | " | $i-C_4H_9S$ | O | |
| 14 | " | " | $n-C_3H_7S$ | O | |
| 15 | $CH_3$ | " | $S-i-C_3H_7$ | O | |

Die erfindungsgemäßen 1,3,4-Thiadiazolylmethyl-thiolphosphorsäurederivate der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm),

Lymantria dispar (Schwammspinner), Lymantria monacha (Nonne), Pieris brassicae (Kohlweißling), Aporia crataegi (Baumweißling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis; Chrysomya macellaria, Chrysomya hominivorax, Lucilia cuprina, Lucilia sericata, Hypoderma lineata;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfalterlaus), Brachycaudus cardui (Große-Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);

aus der Ordnung der Termiten (Isoptera) beispielsweise Reticulitermes lucifugus, Calotermes flavicollis, Leucotermes flavipes, Termes natalensis;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgs-

heuschrecke), Melano plus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Spinnentiere (Acarina), beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nematoden, z.B. Heterodera rostochiensis, Heterodera schachtii, Heterodera avenae, Heterodera glycines, Heterodera triflolii, Stock- und Blattälchen, z.B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden. Im allgemeinen liegen sie zwischen 0,0001 und 10 %, vorzugsweise zwischen 0,01 und 1 %.

Beispiele für Formulierungen sind:

I. 5 Gewichtsteile der Verbindung Nr. 2 werden mit 95 Gewichtsteilen feinteiligem Kaolin innig vermischt. Man erhält auf diese Weise ein Stäubemittel, das 3 Gew.% des Wirkstoffs enthält.

II. 30 Gewichtsteile der Verbindung Nr. 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gewichtsteile der Verbindung Nr. 4 werden in einer Mischung gelöst, die aus 90 Gewichtsteilen Xylol, 6 Gewichtsteilen des Anlagerungsproduktes von 8 bis 10 Mol Äthylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

IV. 20 Gewichtsteile der Verbindung Nr. 3 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

V. 80 Gewichtsteile der Verbindung Nr. 1 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer

Sulfit-Ablauge und 7 Gewichtsteilen pulverförmigem Kieselsäuregel gut vermischt und in einer Hammermühle vermahlen.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10 kg/ha, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden: 1,2-Dibrom-3-chlorpropan, 1,3-Dichlorpropen, 1,3-Dichlorpropen + 1,2-Dichlorpropan, 1,2-Dibrom-ethan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-chlor-phenyl)-N',N'-dimethylformamidin,

Tetrachlorthiophen, 1-(2,6-Difluor-benzoyl)-3-(4-chlor-phenyl)-harnstoff, 0,0-Dimethyl-0-(p-nitrophenyl)-phosphorthioat, 0,0-Diethyl-0-(p-nitrophenyl)-phosphorthioat, 0-Ethyl-0-(p-nitrophenyl)-phenyl-phosphonothioat, 0,0-Dimethyl-0-(3-methyl-4-nitrophenyl)-phosphorthioat, 0,0-Diethyl-0-(2,4-dichlorphenyl)-phosphorthioat, 0-Ethyl-0-(2,4-dichlorphenyl)-phenyl-phosphonothioat, 0,0-Dimethyl-0-(2,4,5-trichlorphenyl)-phosphorthioat, 0-Ethyl-0-(2,4,5-trichlorphenyl)-ethyl-phosphonothioat, 0,0-Dimethyl-0-(4-brom-2,5-dichlorphenyl)-phosphorthioat, 0,0-Dimethyl-0-(2,5-dichlor-4-jodphenyl)-phosphorthioat, 0,0-Dimethyl-0-(3-methyl-4-methylthiophenyl)-phosphorthioat, 0-Ethyl-0-(3-methyl-4-methylthiophenyl)-isopropyl-phosphoramidat, 0,0-Diethyl-0-[p-methylsulfinyl-phenyl]-phosphorthioat, 0-Ethyl-S-phenyl-ethyl-phosphonodithioat, 0,0-Diethyl-[2-chlor-1-(2,4-dichlorphenyl)-vinyl]-phosphat, 0,0-Dimethyl-[-2-chlor-1-(2,4,5-trichlorphenyl)]-vinyl-phosphat, 0,0-Dimethyl-S-(1'-phenyl)-ethylacetat-phosphordithioat, Bis-(dimethylamino)-fluorphosphinoxid, Octamethyl-pyrophosphoramid, 0,0,0,0-Tetraethyldithio-pyrophosphat, S-Chlormethyl-0,0-diethyl-phosphordithioat, 0-Ethyl-S,S-dipropyl-phosphordithioat, 0,0-Dimethyl-0-2,2-dichlorvinyl-phosphat, 0,0-Dimethyl-1,2-dibrom-2,2-dichlorethylphosphat, 0,0-Dimethyl-2,2,2-trichlor-1-hydroxy-ethylphosphonat, 0,0-Dimethyl-S-[1,2-biscarbethoxy-ethyl-(1)]-phosphordithioat, 0,0-Dimethyl-0-(1-methyl-2-carbmethoxy-vinyl)-phosphat, 0,0-Dimethyl-S-(N-methyl-carbamoyl-methyl)-phosphordithioat, 0,0-Dimethyl-S-(N-methyl-carbamoyl-methyl)-phosphorthioat, 0,0-Dimethyl-S-(N-methoxyethyl-carbamoyl-methyl)-phosphordithioat, 0,0-Dimethyl-S-(N-formyl-N-methyl-carbamoylmethyl-phosphordithioat, 0,0-Dimethyl-0-[1-methyl-2-(methyl-carbamoyl)-vinyl]-phosphat, 0,0-Dimethyl-0-[(1-methyl-2-dimethylcarbamoyl)-vinyl]-phosphat, 0,0-Dimethyl-0-[(1-methyl-2-chlor-2-diethylcarbamoyl)-vinyl]-phosphat, 0,0-Diethyl-S-(ethylthio-methyl)-phosphordithioat, 0,0-Diethyl-S-[(p-chlorphenylthio)-methyl]-phosphordithioat, 0,0-Dimethyl-S-(2-ethylthioethyl)-phosphorthioat, 0,0-Dimethyl-S-(2-ethylthioethyl)-phosphordithioat, 0,0-Dimethyl-S-(2-ethylsulfinyl-ethyl)-phosphorthioat, 0,0-Diethyl-S-(2-ethylthio-ethyl)-phosphordithioat, 0,0-Diethyl-S-(2-ethylsulfinyl-ethyl)-phosphorthioat, 0,0-Diethyl-thiophosphoryliminophenyl-acetonitril, 0,0-Diethyl-S-(2-chlor-1-phthalimidoethyl)-phosphordithioat, 0,0-Diethyl-S-[6-chlor-benzoxazolon-(2)-yl(3)]-methyldithiophosphat, 0,0-Dimethyl-S-[2-methoxy-1,3,4-thiadiazol-5-[4H]-onyl-(4)-methyl]-phosphordithioat, 0,0-Diethyl-0-[3,5,6-trichlor-pyridyl-(2)]-phosphorthioat, 0,0-Diethyl-0-(2-pyrazinyl)-phosphorthioat, 0,0-Diethyl-0[2-isopropyl-4-methyl-pyrimidinyl(6)]-phosphorthioat, 0,0-Diethyl-0-[2-(diethylamino)-6-methyl-4-pyrimidinyl]-thionophosphat, 0,0-Dimethyl-S-(4-oxo-1,2,3-benzotriazin-3-[4H]-yl-methyl)-phosphordithioat, 0,0-Dimethyl-S-[(4,6-diamino-1,3,5-triazin-2-yl)-methyl]-phosphordithioat, 0,0-Diethyl-(1-phenyl-1,2,4-triazol-3-yl)-thionophosphat, 0,S-Dimethyl-phosphor-amido-thioat, 0,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,-trans-chrysanthemat, 5-Benzyl-furyl-(3)-methyl-DL-cis,-trans-chrysanthemat, 3-Phenoxybenzyl(±)-cis,trans-2,2-dimethyl-3-(2,2-dichlorvinyl)-cyclopropancarboxylat, -Cyano-3-phenoxybenzyl(±)-cis,trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoethyl-DL-cis,trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Die folgenden Beispiele belegen die biologische Wirkung der neuen Verbindungen. Vergleichsmittel ist der bekannte Wirkstoff O,O-Dimethyl-S-(1,2-bisethoxycarbonyl-ethyl)-phosphordithioat (DE-PS 847 897).

Die Numerierung der Wirkstoffe entspricht der der tabellarischen Auflistung.

Beispiel I

Kontaktwirkung auf Schaben (Blatta orientalis)

Der Boden eines 1 l-Einmachglases wird mit der acetonischen Lösung des Wirkstoffs behandelt. Nach dem Verdunsten des Lösungsmittels setzt man je Glas 5 adulte Schaben. Die Mortalitätsrate wird nach 48 Stunden bestimmt.

In diesem Test zeigen die Wirkstoffe Nr. 2, 3, 4 eine gute Wirkung.

Beispiel II

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

In diesem Test zeigen die Wirkstoffe Nr. 1, 2, 3, 4 eine bessere Wirkung als das Vergleichsmittel.

Beispiel III

Zuchtversuch mit Baumwollwanzen (Dysdercus intermedius)

50 g Baumwollsaat werden für 24 Stunden in der wäßrigen Wirkstoffaufbereitung eingequollen. Anschließend wird die überstehende Flüssigkeit abgeschüttet. Das Emulsionskonzentrat besteht aus 10 Gew.% Wirkstoff und 90 Gew.% eines Emulgator-Gemisches. Das Emulgator-Gemisch setzt sich wei folgt zusammen: 10 Gew.% ethoxyliertes Rizinusöl, 20 Gew.% ethoxyliertes Isooctylphenol und 70 Gew.% Cyclohexanon.

Darauf bringt man 20 Wanzen im vorletzten Larvenstadium in 1-l-Gläser , deren Boden mit feuchtem Sand bedeckt ist. Diese Tiere erhalten 7 Tage lang die vorbehandelten Samen als ausschließliche Nahrung. Anschließend wird unbehandeltes Futter geboten.

Es wird beobachtet, ob die Tiere
a) überleben und
b) sich zu Adulten häuten.

In diesem Test zeigt der Wirkstoff Nr. 2 eine bessere Wirkung als das Vergleichsmittel.

Beispiel IV

Fraß- und Kontaktwirkung auf Raupen der Kohlschabe (Plutella maculipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt. Nach 48 Stunden beurteilt man die Wirkung.

In diesem Test zeigen die Wirkstoffe Nr. 2 und 4 eine gute Wirkung.

Beispiel V

Kontaktwirkung auf Blattläuse (Aphis fabae); Spritzversuch

Getopfte Bohnenpflanzen (Vicia faba) mit starken Blattlauskolonien werden in einer Spritzkammer mit wäßrigen Wirkstoffaufbereitungen tropfnaß gespritzt. Die Auswertung erfolgt nach 48 Stunden.

In diesem Test zeigen die Wirkstoffe Nr. 1, 2, 3, 4 eine gute Wirkung.

Beispiel VI

Systemische Wirkung auf Blattläuse (Aphis fabae)

Junge Bohnenpflanzen (Vicia faba), die in Töpfen mit humoser Gartenerde stehen, werden mit Blattläusen (Aphis fabae) infiziert. Nach 7 Tagen gießt man die Pflanzen mit 20 ml der wäßrigen Wirkstoffaufbereitung. Die Mortalitätsrate der Blattläuse wird nach 48 Stunden ermittelt.

In diesem Test zeigen die Wirkstoffe Nr. 1 und 2 eine bessere Wirkung als das Vergleichsmittel.

Patentansprüche

1. 1,3,4-Thiadiazolylmethyl-thiolphosphorsäurederivate der Formel

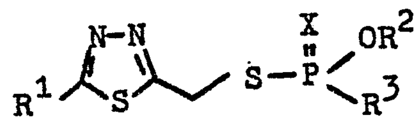

(I),

in der
$R^1$ und $R^2$ gleich oder verschieden sind und einen unverzweigten oder verzweigten Alkylrest mit bis zu 6 Kohlenstoffatomen,
$R^3$ einen unverzweigten oder verzweigten Alkoxy- oder Alkylthiorest mit bis zu 6-Kohlenstoffatomen, die Aminogruppe oder einen unverzweigten oder verzweigten Alkyl- oder Dialkylaminorest mit jeweils bis zu 5 Kohlenstoffatomen in einer Alkylgruppe und
X Sauerstoff oder Schwefel bedeuten.

2. O-Ethyl-S-n-propyl-S-(2-methyl-1,3,4-thiadiazol-5--yl-methyl)-dithiophosphat.

3. O-Ethyl-S-sec.-butyl-S-(2-methyl-1,3,4-thiadiazol-5--yl-methyl)-dithiophosphat.

4. O-Ethyl-N-isopropyl-S-(2-methyl-1,3,4-thiadiazol-5--yl-methyl)-thiolphosphorsäureesteramid.

5. Verfahren zur Herstellung der 1,3,4-Thiadiazolylmethyl-thiolphosphorsäurederivate der Formel I

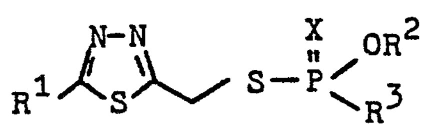

(I),

in der
$R^1$ und $R^2$ gleich oder verschieden sind und einen unverzweigten oder verzweigten Alkylrest mit bis zu 6 Kohlenstoffatomen,
$R^3$ einen unverzweigten oder verzweigten Alkoxy- oder Alkylthiorest mit bis zu 6-Kohlenstoffatomen, die Aminogruppe oder einen unverzweigten oder verzweigten Alkyl- oder Dialkylaminorest mit jeweils bis zu 5 Kohlenstoffatomen in einer Alkylgruppe und
X Sauerstoff oder Schwefel bedeuten,
dadurch gekennzeichnet, daß man 1,3,4-Thiadiazolylmethylhalogenide der Formel

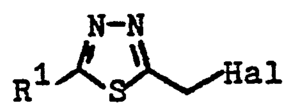 (II),

in der $R^1$ die obengenannte Bedeutung hat und Hal für Halogen steht,

mit Salzen von Thiophosphorsäurederivaten der Formel

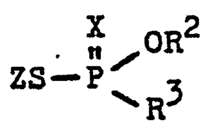 (III),

in der $R^2$, $R^3$ und X die obengenannten Bedeutungen haben und Z ein Alkalimetallion, ein Äquivalent Erdalkalimetallion oder ein gegebenenfalls durch Alkylreste substituiertes Ammoniumion bedeuten, gegebenenfalls in Anwesenheit eines Verdünnungsmittels umsetzt.

6. Schädlingsbekämpfungsmittel, enthaltend inerte Zusatzstoffe und ein 1,3,4-Thiadiazolylmethylthiolphosphorsäurederivat der Formel

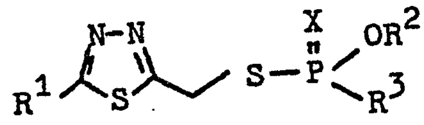

(I),

in der
$R^1$ und $R^2$ gleich oder verschieden sind und einen unverzweigten oder verzweigten Alkylrest mit bis zu 6 Kohlenstoffatomen,
$R^3$ einen unverzweigten oder verzweigten Alkoxy- oder Alkylthiorest mit bis zu 6-Kohlenstoffatomen, die Aminogruppe oder einen unverzweigten oder verzweigten Alkyl- oder Dialkylaminorest mit jeweils bis zu 5 Kohlenstoffatomen in einer Alkylgruppe und
X Sauerstoff oder Schwefel bedeuten,
als Wirkstoff.

7. Verfahren zur Bekämpfung von Schädlingen, dadurch gekennzeichnet, daß man eine wirksame Menge eines 1,3,4-Thiadiazolylmethyl-thiolphosphorsäurederivates der Formel I gemäß Anspruch 1 auf die Schädlinge und/oder deren Lebensraum einwirken läßt.

Europäisches Patentamt

**0062832**

Nummer der Anmeldung

EP 82 10 2667

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | EP-A-0 016 383 (BASF)<br>* Insgesamt *<br>--- | 1,6,7 | C 07 F 9/65<br>A 01 N 57/16<br>A 01 N 57/32 |
| Y | US-A-3 766 200 (K. RÜFENACHT)<br>* Insgesamt *<br>--- | 1,6,7 | |
| Y | HELVETICA CHIMICA ACTA, Band 55, Fasc. 6, Nr. 189, 1972, Seiten 1979-1986, K. RÜFENACHT: "189. Arbeiten über Phosphorsäure- und Thiphosphorsäureester mit einem heterocyclischen Substituenten". 2-Alkoxy- und 2 Alkylthio-5-chlormethyl-1,3,4 thiadiazole, 2-Alkyl-5 chlormethyl-1,3,4-oxadiazole und daraus hergestellte Thio- und Dithiophosphorsäure-O O-dialkyl-S-[(2-alkoxy- und 2 alkylthio-1,3,4-thiadiazol-5-yl) methyl]- bzw.-S-[(2-alkyl-1,3,4 oxadiazol-5-yl)-methyl]-ester" * Seite 1982, letzte Spalte - Seite 1985, oben *<br>--- | 1,6,7 | **RECHERCHIERTE SACHGEBIETE (Int. Cl. 3)**<br>C 07 F 9/00 |
| Y | CHEMICAL ABSTRACTS, Band 81, Nr. 11, 16. September 1974, Seite 475, Nr. 63638g, Columbus, Ohio, USA<br>& CS - A - 152 178 (V. KONECNY) 15-02-1974 * Zusammenfassung *<br>----- | 1,6,7 | |

Der vorliegende Recherchenbericht wurde für alle Patentansprüche erstellt.

| Recherchenort | Abschlußdatum der Recherche | Prüfer |
|---|---|---|
| DEN HAAG | 13-07-1982 | BESLIER L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82